**Europäisches Patentamt**

**European Patent Office**

**Office européen des brevets**

(19)

(11) Veröffentlichungsnummer: **0 117 509**
**A2**

(12) # EUROPÄISCHE PATENTANMELDUNG

(21) Anmeldenummer: **84101791.6**

(22) Anmeldetag: **21.02.84**

(51) Int. Cl.³: **A 61 J 1/00**

(30) Priorität: **23.02.83 DE 8304946 U**

(43) Veröffentlichungstag der Anmeldung: **05.09.84**
**Patentblatt 84/36**

(84) Benannte Vertragsstaaten: **AT BE CH DE FR GB IT LI LU NL SE**

(71) Anmelder: **Intermedicat GmbH, Gerliswilstrasse 45, CH-6020 Emmenbrücke (CH)**

(72) Erfinder: **Brethauer, Ulrich, Rhönstrasse 2, D-3501 Körle (DE)**

(74) Vertreter: **von Kreisler, Alek, Dipl.-Chem. et al, Deichmannhaus am Hauptbahnhof, D-5000 Köln 1 (DE)**

(54) **Behälter für flüssige Formula-Diäten.**

(57) Die Erfindung betrifft Behälter für flüssige Formula-Diäten o. dgl. mit einem Stutzen zum Entnehmen der Flüssigkeit, gekennzeichnet durch einen geschlossenen Beutelkörper, der aus miteinander verbundenen Kunststoff- und Metallfolien aufgebaut ist und bei dem die äußere oder innere Folie als Außen- oder Innenschicht des Beutelkörpers aus siegelfähigem Material besteht, an dem der Stutzen mit einer Auflageplatte befestigt ist.

# VON KREISLER  SCHÖNWALD  EISHOLD  UQE$7509
# VON KREISLER  KELLER  SELTING  WERNER

PATENTANWÄLTE

Dr.-Ing. von Kreisler † 1973
Dr.-Ing. K. Schönwald, Köln
Dr.-Ing. K. W. Eishold, Bad Soden
Dr. J. F. Fues, Köln
Dipl.-Chem. Alek von Kreisler, Köln
Dipl.-Chem. Carola Keller, Köln
Dipl.-Ing. G. Selting, Köln
Dr. H.-K. Werner, Köln

B.Braun Melsungen
Aktiengesellschaft
Melsungen

| Ihr Zeichen | Ihre Nachricht vom | Unser Zeichen |
|---|---|---|

DEICHMANNHAUS AM HAUPTBAHNHOF
**D-5000 KÖLN 1**

AvK/IM

22.Februar 1983

BETRIFFT:

## Behälter für flüssige Formula-Diäten

Die Erfindung betrifft einen Behälter für flüssige Formula-Diäten oder dergleichen mit Stutzen zum Entnehmen der Flüssigkeit.

Gebrauchsfertige, hochkalorische Trink- und Sondennahrung wird derzeit ausschließlich in Glasflaschen angeboten. Der Einsatz von Glasflaschen ist aus folgenden Gründen erforderlich:

- Optimale Sperreigenschaften gegenüber Gasen und Wasserdampf, wobei das Füllgut primär vor Sauerstoff bewahrt werden muß.
- Hohe Temperaturbeständigkeit über 120°C bei der Sterilisation im Autoklaven.
- Inertes Verpackungsmaterial.
- Gute Handhabung auf handelsüblichen Flaschenabfüllanlagen.
- Durch Einsatz von braungefärbtem Glas recht guter Schutz gegen UV-Einwirkung.

Telefon: (0221) 13 10 41
Telex: 838 2307 dopa d
Telegramm: Dompatent Köln
Telecopier: (0221) 13 42 97

KONTEN: Sal. Oppenheim jr. & Cie., Köln (BLZ 370 302 00) Kto. Nr. 10 760
Deutsche Bank AG, Köln (BLZ 370 700 60) Kto. Nr. 1 165 018
Postscheck Köln (BLZ 370 100 50) Kto. Nr. 654-500

0117509

Allerdings ist der Einsatz von Glasflaschen als Primärverpackung für flüssige Formula-Diäten auch mit gewissen Nachteilen behaftet:

- Hohes Eigengewicht der Glasflaschen (=hohe Transportkosten).
- Bruchanfälligkeit von Glas.
- Zur Überleitung der Sondennahrung wird ein aufwendiges Übertragungsgerät mit Flaschenbelüftung, Steigrohr und dicht sitzender Kappe für die Flaschenöffnung benötigt. Die Übertragungsgeräte werden üblicherweise aus thermoplastischen Kunststoffen hergestellt.
- Zur Aufhängung der Glasflaschen wird eine separate
  Aufhängevorrichtung benötigt.
- Beim Einsatz von Pumpen zur Überleitung der Sondennahrung sind Glasflaschen umständlich zu handhaben.
  Hier werden in der Regel die flüssigen Formula-Diätetika in flexible Beutelbehältnisse umgefüllt, speziell
  auch im mobilen Einsatz.
- Es sind relativ lange Sterilisationszeiten und auch
  hohe Sterilisationstemperaturen von ca 135°C üblich.
  Dadurch entstehen auch höhere Kosten und die Produktqualität leidet durch Karamellisierung der Zuckerkomponenten.

Es war Aufgabe der vorliegenden Erfindung, einen Behälter für eine gebrauchsfertige, hochkalorische
Trink- und Sondennahrung zu entwickeln, die die positiven Eigenschaften einer Glasflasche, die hier als
Stand der Technik anzusehen ist, beinhaltet und gleichzeitig deren Nachteile, die oben beschrieben wurden,
nicht mehr aufweist.

Diese Aufgabe wird gelöst durch einen geschlossenen Beutelkörper, der aus miteinander verbundenen Kunststoff- und Metallfolien aufgebaut ist und bei dem die äußere oder innere Folie als Außen- oder Innenschicht des Beutelkörpers aus siegelfähigem Material besteht und an dem der Stutzen mit einer z.B. spritzgußtechnisch angespritzten Auflageplatte befestigt ist.

Besonders wichtig für die Verwendbarkeit als Behälter sind die Eigenschaften:
-geringe bis keine Wasserdampf- und Gasdurchlässigkeit;
-Undurchlässigkeit für UV-Strahlung;
-Aromadichtigkeit bei zugesetzten Geschmackstoffen;
-Geschmacksneutralität gegenüber Füllgut.

So können beispielsweise folgende Verbundfolien als Packstoff für flüssige Sondenkost zum Einsatz kommen, wobei die einzelnen Monofolien im Behälter in der Rei henfolge von außen nach innen angeordnet sind:
1. Polyester, z.B. Polyethylen
   terephthalat (PETP) oder Poly-
   butylenterephthalat(PBTP),      12,5 μm
   Aluminium                        9,0 μm
   Polyester z.B. Polyethylen
   terephthalat (PETP) oder Poly-
   butylenterephthalat(PBTP),      12,5 μm
   Polypropylen                    75,0 μm

Bei dieser Folienkombination ist Polypropylen die Siegelschicht bzw. die Beutelinnenschicht, die mit der flüssigen Formula-Diät in Kontakt steht.

2. Polyester, z.B. Polyethylenterephthalat
   (PETP) oder Polybutylenterephthalat

   | | | |
   |---|---|---|
   | (PBTP) | 12 | µm |
   | Aluminium | 15 | µm |
   | Polyethylen, z.B. Polyethylen hoher Dichte (0,94-0,96 g/cm³) | 75 | µm |

In diesem Fall bildet Polyethylen die innere Schicht und die Siegelschicht und steht in direktem Kontakt mit der Formula-Diät.

Die Materialkombinationen nach den vorstehenden Beispielen 1 und 2 können auch mit folgenden Polymerarten ausgeführt sein und bilden dann weitere Beispiele für den mehrschichtigen Folienaufbau, der zur Behälterherstellung eingesetzt werden kann.

1. Lineares Polyethylen niederer Dichte (LLDPE)
2. Polyethylen niederer Dichte (LDPE) (0,92-0,93 g/cm³)
3. Polyamid (PA), z.B. PA 6, PA 66, PA 6/10, PA 11, PA 12 und davon abgeleitete Cokondensate
4. Polycarbonate (PC)
5. Plastifiziertes Polyvinylchlorid (PVC-P)
6. Polyurethan
7. Polymethylpenten

Man kann Beutel in beliebigem Forma aus den in den Beispielen aufgeführten Folien im Wärmekontakt-, im Wärmeimpuls- oder anderen Fügeverfahren schweißen, flüssige Sondennahrung darin abpacken und im Gegendruckautoklaven, z.B. bei 121°C 20 Minuten sterilisieren.

Zur Entnahme des sterilisierten, im Beutel befindlichen Füllgutes dient der in bevorzugter Ausführungsform als zylindrischer Rohr- oder Schlauchansatz ausgebildete Stutzen, in den ein Dorn mit einem ableitenden Flüssigkeitskanal eingebracht wird, durch den die Flüssignahrung mittels eines Übertragungsgerätes mit Tropfkammer in eine im Patienten befindliche Ernährungssonde eingeleitet wird.

Derartige Stutzen können je nach Folienaufbau sowohl auf der Behälteraußenseite als auch auf der Behälterinnenseite flüssigkeitsdicht befestigt sein. Voraussetzung ist, daß auf Außen- oder Innenseite ein jeweils fügetechnisch kompatibler Kunststoffwerkstoff als Folienschicht vorhanden ist, d.h. man wird bei einer Polyethylenfolienschicht ein Entnahmeteil aus Polyethylen und bei einer Polypropylenschicht ein Teil aus Propylen wählen.

Befindet sich der Entnahmestutzen auf der Behälteraußenseite, wirkt die unter der Innenbohrung zugängliche Behälterwandfolie auch als Verschluß, der beim Gebrauch von dem Entnahmedorn durchstoßen wird. Ein auf der Behälterinnenseite angebrachter Entnahmestutzen muß verständlicherweise eine in der Bohrung befindliche Trennmembran aufweisen, da der Stutzen durch die aus der Verbundfolie bestehende Wand durchgeführt ist.

Die Stutzen haben an einem Ende eine kreisrunde oder auch anders geformte Auflageplatte, die bei der Verbindung mit der Substratfolie mechanisch ausreichend zugfest und flüssigkeitsdicht ist.

Als Fügemethode werden übliche Verfahren wie Schweißen (Impulsschweißen, Ultraschallschweißen, Kontaktschweißen etc.), Kleben, Spritzgießen des Stutzens direkt auf die Folie angewendet.

0117509

Vorteilhafte Ausgestaltungen der Erfindung sind in den Unteransprüchen gekennzeichnet.

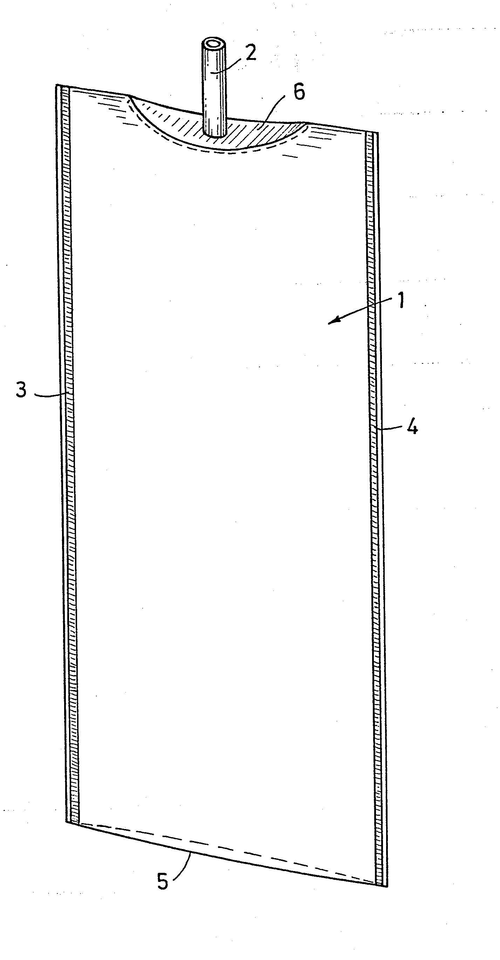

In der Zeichnung ist ein Ausführungsbeispiel der Erfindung schematisch darstellt.

Der Beutel 1 mit einem zum Entnehmen des Beutelinhalts dienenden Stutzen 2 wird aus einer PE-ALU-Polyester-Verbundfolie wie folgt hergestellt:

Zunächst wird die Folie auf die doppelte Länge der späteren Beutellänge zugeschnitten und wird mit Hilfe eines Lochstempels in der angenommenen Beutelmitte ein Loch gestanzt; es entspricht im Durchmesser etwa der gewünschten Stutzengröße. Nun wird die vorbereitete Folie in ein Spritzgußwerkzeug derart eingelegt, daß die auch als Siegelschicht wirksame Polyethylenschicht auf der Angußseite der Maschine liegt. Ein Werkzeugkern fährt beim Verschließen der Form durch das vorgestanzte Loch in der Folie und formt die innere Bohrung des Stutzens. Da die Anspritzung von der Polyethylen beschichteten Seite aus erfolgt, ist eine gute Verbindung zwischen Stutzenplatte und Folie gewährleistet.

Durch das Anspritzen von der Innenseite des zu formenden Beutels 1 her wird die Alu-Folie fest auf die untere Werkzeughälfte gedrückt, so daß kein Material an die Außenseite der Folie gelangt. Nach der Entnahme aus dem Werkzeug wird die Folie in der Mitte gefaltet und an ihren Längsseiten 3, 4 verschweißt. Die dem Stutzen 2 gegenüberliegende Stirnseite 5 bleibt offen, um ein späteres Befüllen des Beutels 1 zu ermöglichen. Die Ausbildung der Auflagenplatte 6 kann sowohl kreisförmig aber ebenso beliebig anders geformt sein. Eben-

0117509

so können mit einem Spritzgießvorgang mehrere Befüll-
bzw. Entnahmesysteme auch unterschiedlicher Geometrie
angebracht werden.

## Ansprüche

1. Behälter für flüssige Formula-Diäten o.dgl. mit einem Stutzen zum Entnehmen der Flüssigkeit, gekennzeichnet durch einen geschlossenen Beutelkörper (1), der aus miteinander verbundenen Kunststoff- und Metallfolien aufgebaut ist und bei dem die äußere oder innere Folie als Außen- oder Innenschicht des Beutelkörpers (1) aus siegelfähigem Material besteht, an dem der Stutzen (2) mit einer Auflageplatte (6) befestigt ist.

2. Behälter nach Anspruch 1, dadurch gekennzeichnet, daß die Verbundfolie in der Reihenfolge von außen nach innen wie folgt aufgebaut ist:

| | |
|---|---|
| Polyester, z.B. Polyethylen terephthalat (PETP) oder Polybutylenterephthalat(PBTP), | 12,5 $\mu$m |
| Aluminium | 9,0 $\mu$m |
| Polyester z.B. Polyethylen terephthalat (PETP) oder Polybutylenterephthalat(PBTP), | 12,5 $\mu$m |
| Polypropylen | 75,0 $\mu$m |

3. Behälter nach Anspruch 1, dadurch gekennzeichnet, daß die Verbundfolie in der Reihenfolge von außen nach innen wie folgt aufgebaut ist:

| | |
|---|---|
| Polyester, z.B. Polyethylenterephthalat (PETP) oder Polybutylenterephthalat (PBTP) | 12 $\mu$m |
| Aluminium | 15 $\mu$m |
| Polyethylen, z.B. Polyethylen hoher Dichte (0,94-0,96 g/cm³) | 75 $\mu$m |

4. Behälter nach einem der Ansprüche 1- 3, dadurch gekennzeichnet, daß auf der Außen- oder Innenseite des Beutelkörpers (1) ein zur Befestigung der Auflageplatte (6) des Stutzens (2) jeweils fügetechnische kompatibler Kunststoff-Werkstoff als Folienschicht vorhanden ist.

5. Behälter nach einem der Ansprüche 1 - 4, dadurch gekennzeichnet, daß die Auflageplatte (6) des Stutzens (2) auf der Außenseite des Beutelkörpers (1) angebracht ist und die unter der Innenbohrung des Stutzens (2) zugängliche Wandfolie des Beutelkörpers (1) einen durchstechbaren Verschluß bildet.

6. Behälter nach einem der Ansprüche 1 - 4, dadurch gekennzeichnet, daß die Auflageplatte (6) des Stutzens (2) auf der Innenseite des Beutelkörpers (1) angebracht ist und in seinem Durchgangskanal eine durchstechbare Trennmembran angeordnet ist.

7. Behälter nach einem der Ansprüche 1 - 6, dadurch gekennzeichnet, daß die Auflageplatte (6)bei der Verbindung mit der Substratfolie mechanisch ausreichend zugfest und flüssigkeitsdicht ist.

8. Behälter nach einem der Ansprüche 1 - 7, dadurch gekennzeichnet, daß die Auflageplatte (6) mit der Folie des Beutelkörpers (1) durch Schweißung oder Klebung verbunden oder direkt an die Folie angespritzt ist.

0117509